# EUROPEAN PATENT SPECIFICATION

(11) **EP 1 551 618 B1**
(45) Date of publication and mention of the grant of the patent: **26.04.2006**
(21) Application number: 03765880.4
(22) Date of filing: 22.07.2003
(51) Int. Cl.: B29D 30/06, B29C 35/02

(54) **SEGMENTED TIRE MOLD TO REDUCE FLASH**
SEGMENTIERTE REIFENFORM ZUR VERRINGERUNG VON GRAT
MOULE A SEGMENTS POUR PNEUMATIQUES PERMETTANT DE REDUIRE LES BAVURES

(30) Priority: 24.07.2002 US 205045
(43) Date of publication of application: 13.07.2005
(73) Proprietor: Bridgestone/Firestone North American Tire, LLC, Nashville, Tennessee 37214 (US)
(72) Inventor: REEP, David, Copley, OH 44321 (US); SEROKA, Edward, Brunswick, OH 44212 (US); CLARK, Michael, Brunswick, OH 44212 (US); SPENCER, Danny, Canal Fulton, OH 44614 (US)
(74) Representative: Banzer, Hans-Jörg
(86) International application number: PCT/US2003/022825
(87) International publication number: WO 2004/009337

(56) References cited:
- EP-A- 0 331 501
- EP-A- 0 726 174
- EP-A- 0 818 290
- WO-A-01/38109
- DE-A- 4 205 058
- GB-A- 1 322 608
- GB-A- 1 394 879
- US-A- 4 655 699
- US-A- 4 857 122
- US-A- 5 536 348
- US-A- 5 871 600

## Description

### 1. TECHNICAL FIELD

The invention relates to molds for vulcanizing green tires. More specifically, the invention relates to an improved mold wherein the mold parting lines between the tread mold sections and sidewall mold plates reduce flash to provide a more pleasing sidewall on the molded tire.

### 2. BACKGROUND INFORMATION

Various types of vulcanizing molds have been developed, many of which include annular arrays of tread mold segments which are movable with respect to each other, for enclosing a green tire to be subsequently vulcanized therein. These mold segments are movable in an outward direction from upper and lower sidewall mold plates in order to load the green tire into the mold and subsequently remove the molded tire from the mold. The mold segments, when in abutting contact with the sidewall mold plates, form mold part lines which are susceptible to receiving small amounts of the elastomeric material or rubber from the green tire as the green tire rubber is forced outwardly under pressure against the mold surfaces and subsequently into the mold part lines. This rubber results in flash being formed on the tire at the mold part lines, which depending upon its location and amount, can result in a less aesthetically pleasing finished tire. Although this flash does not effect the performance of the tire, it does effect the appearance of the finished tire, especially when it appears on the outside sidewall region of the tire. In order to remove this excess flash, various grinding operations are used which increase the cost of production.

This aesthetic aspect of newly vulcanized tires is important for all tires including tires having aggressive sidewall patterns, such as for vehicles which have both on-road and off-road usage. The appearance of the tire sidewalls is important to many vehicle owners and the presence of flash thereon detracts from the appearance of the tire and vehicle.

In certain tire constructions, a strip of nylon, such as a nylon cap ply which extends circumferentially throughout the tire and axially between the sidewall areas, or nylon cap layers which are located at the shoulder regions of the tires, are added as an additional reinforcement adjacent to the reinforcement belt package of the tire. These nylon strips make the belt package more rigid and it has been found that this increased stiffness reduces the flexure of the belt package when being molded in the crown portion of a tire which results in an increase in the amount of flash generated during the vulcanization of the tire. These nylon cap plies and cap layers are being incorporated into many tires including those having a more aggressive sidewall patterns, and the presence of flash in these tires becomes an increasing problem.

Although various molds can be developed to reduce excessive flash in the sidewaii areas when a nylon strip is incorporated into the belt package, it would increase considerably the cost of the vulcanization molds and require considerable retrofit to existing segmented molds.

Therefore, the need exists for an improved segmented mold for molding green tires, especially when they contain a nylon cap ply or nylon cap layer, to reduce flash in the sidewall areas of the tire without requiring excessive modification to existing molds.

European patent application EP 0 726 174 A1 describes a tire mold corresponding to the preamble of independent claim 1 and a tire corresponding to the preamble of independent claim 5. According to this document, the occurrence of burrs along the parting lines between different segments of the mold can be prevented by means of providing on the inner surface of the mold protrusions immediately radially outside the parting lines and a rip immediately radially inside the parting lines.

International patent application WO 01138109 A1 describes a method for molding a tire and a mold therefore. According to this document, a segmented mold has lugs in the shoulder regions of the segments with complementary lug extensions in the sidewall. The lug extensions align with and form the appearance of the lugs extending radially inward into the sidewall of the tire.

### BRIEF SUMMARY OF THE INVENTION

The present invention provides a tire mold according to claim 1 and a tire according to claim 5. The dependent claims define preferred and advantageous embodiments of the invention.

The invention provides a tire vulcanization mold of the type having an annular array of tread mold segments which are brought into abutting engagement with spaced sidewall mold plates, wherein the parting lines formed between the mold segments and plates reduce the amount of flash generated therein, especially when the green tire has a nylon cap ply or nylon cap layer, by locating the mold line in close alignment with the nylon strip or strips in the crown portion of the tire.

Preferably, the mold part lines between the tread mold segments and sidewall mold plates are located at a distance not greater than 1/2 inch (12.7 mm) inwardly from the inner circumferential surface of the tread mold segment which forms the skid surface on the molded tire.

According to a preferred embodiments of the invention, the tire, which is molded within the mold, can have various combinations of nylon strips, such as a nylon cap ply which extends axially between the sidewall of the tire, alone or in combination with one or more nylon cap layers located in the shoulder regions of the green tire.

A further feature of the invention is to form the mold part lines closely adjacent to the shoulder region of the finished tire to make any resulting flash less obtrusive than if the flash is formed lower in the sidewall of the tire, especially tires having a more aggressive tread pattern forming the sidewall area.

The foregoing advantages, construction and operation of the present invention wiii become more readiiy apparent from the following description and accompanying drawings.

### BRIEF DESCRIPTION OF THE DRAWINGS

Fig. 1 is a diagrammatic side elevational view with portions broken away and in section, of one type of tire press containing the improved mold of the present invention;
Fig. 2 is an enlarged diagrammatic sectional view of the tread mold segments and sidewall mold plates removed from the press of Fig. 1;
Fig. 3 is an enlarged fragmentary sectional view of the tire building mold mounted within the tire molding press of Fig. 1;
Fig. 4 is a further enlarged fragmentary sectional view of a portion of Fig. 3;
Fig. 5 is a greatly enlarged fragmentary sectional view of the encircled portion of Fig. 4 showing a single nylon cap ply located between the body ply carcass and tread of the tire;
Fig. 6 is a view similar to Fig. 5 showing the addition of a nylon cap layer above the nylon cap ply in the shoulder region of the tire;
Fig. 7 is a fragmentary view similar to Figs. 5 and 6 showing two nylon cap layers above the nylon cap ply in the shoulder region of the tire;
Fig. 8 is a fragmentary view similar to Figs. 5-7 showing a nylon cap layer in the shoulder region of the tire without a nylon cap ply;
Fig. 9 is a fragmentary sectional view similar to Figs. 5-8 showing two nylon cap plies with a single nylon cap layer, and
Fig. 10 is a fragmentary perspective view of a pneumatic tire produced by the mold of the present invention containing the nylon reinforcing strip.

Similar numerals refer to similar parts throughout the drawings.

### DETAILED DESCRIPTION OF THE INVENTION

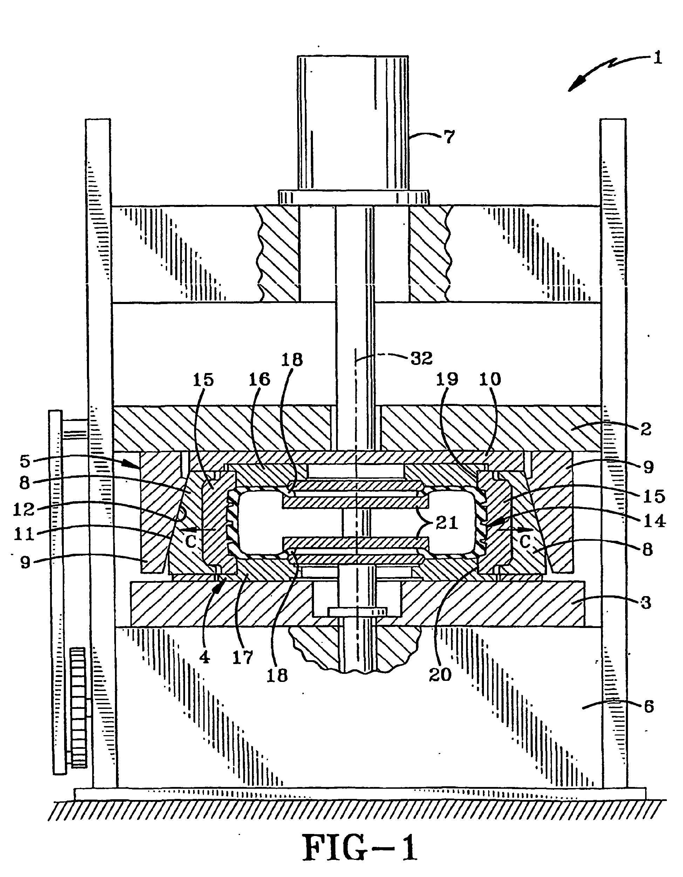

One type of press in which the improved segmented mold is mounted, is indicated generally at 1, and is shown diagrammatically in Fig. 1. Press 1 is similar in some respects to the press shown in U.S. Patent No. 5,866,170.

Press 1 includes upper and lower platens 2 and 3 respectively, with an outer ring 9 being attached to platen 2. Outer ring 9 has an inner tapered surface 12 which is complementary to and in sliding engagement with tapered surfaces 11 of a plurality of inner slide blocks 8 which form a mold closure ring. Lower platen 3 is supported on a base 6 and a hydraulic or pneumatic pressure device 7 raises and lowers a top mold plate 10. Gear 39 raises and lowers top platen 2 and outer ring 9 through a linkage 39A. The improved mold, indicated generally at 4, includes an annular array of tread mold sections 15 and annular sidewall mold plates 16 and 17. The particular construction and operation of press 1 as shown in Fig. 1 can be varied without effecting the concept of the invention. The drawings illustrate one type of press and segmented mold having the radially outwardly movable mold segments 15 and sidewall plate 16 and 17 which provide the reduced flash in the sidewall regions of a vulcanized tire.

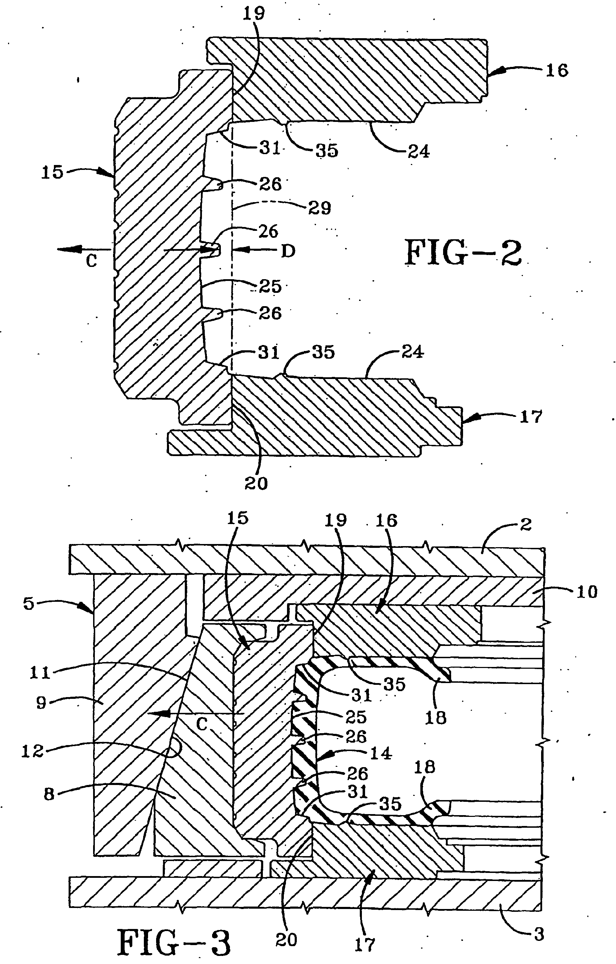

The main and distinguishing feature of the invention is shown particularly in Figs. 2-4, wherein tread mold segments 15 mate with sidewall mold plates 16 and 17 in an abutting relationship and form a pair of annular mold part lines 19 and 20 therebetween, which part lines are very high in the sidewall regions of the tire closely adjacent the shoulder area and not lower down in the sidewall region as in prior molds and tires. As in most vulcanization molds, the part lines formed between the various mold segments and sidewall plates will create a flash line 22 on the sidewalls 23 of a usual pneumatic vulcanized tire 28 such as shown in Fig. 10. However, one of the main features of the invention is the elimination or reduction of flash that will appear along line 22 on tire sidewalls 23 in vulcanized tire 28, and the location of this flash line high up on the sidewall and closely adjacent the shoulder region of the tire.

The operation of the particular mold 1, which is shown in the drawings, is best illustrated in Fig. 1 and is the same for similar segmented molds not having the unique parting line locations of the present invention. Gear 39 and linkage 39A, or a pneumatic or hydraulic device (not shown), raises platen 2 and connected ring 9. Simultaneously therewith, pressure device 7 extends mold plate 10 and top sidewall mold plate 16 connected thereto, which releases the clamping engagement between ring 9, slide blocks 8 and mold segments 15. A vulcanized tire can then be removed from the mold and a green tire 14 placed therein. After a green tire is loaded into the press, a generally reverse procedure clamps the mold components 15, 16 and 17 about green tire 14. This is a typical sequence of operation of a press in which the mold of the present invention will be incorporated. However, other types of molds and operating sequences can be utilized to achieve the same results.

As shown in Fig. 2, tread mold segments 15 include a circumferentially extending slightly curved smooth inner surface 25 which has a plurality of inwardly extending projections 26. Surface 25 will form skid surface 27 on vulcanized tire 28 with projections 26 forming the various tire lug elements 30 as shown in Fig. 10. Tread mold segments 15 may also have several projections 31 in the outer axial ends or shoulder forming regions, as shown in Fig. 2, which are located closely adjacent part lines 19 and 20 to assist in forming part of the shoulder lug elements 33 of tire 28. The term skid surface refers to the outer surface area of the finished tread from which the tread lugs 30 extend, or referred to as the bottom surfaces of the intervening tire lug. grooves. This surface matches and is formed by inner surface 25 of tread mold segments 15.

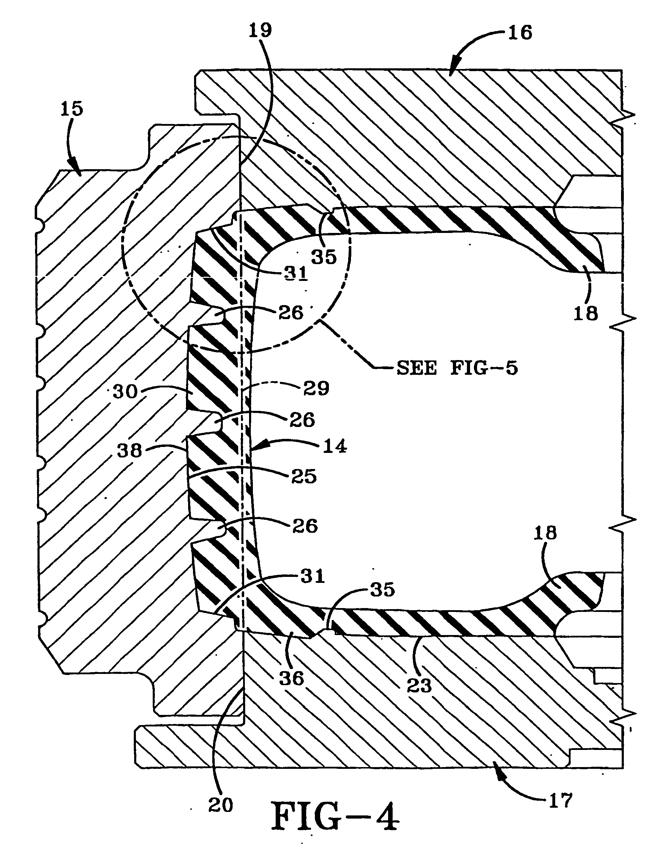

Sidewall plates 16 and 17 will also be provided with various projections 35 which extend axially inwardly from annular cavity surfaces 24 to form a variety of sidewall projections 36 as shown on finished tire 28 in Fig. 10. Fig. 2 diagrammatically represents a section through sidewall plates 16 and 17, which when joined in an abutting relationship with a tread mold segment 15 in a closed position as shown in Fig. 3, molds finished tire 28 therein.

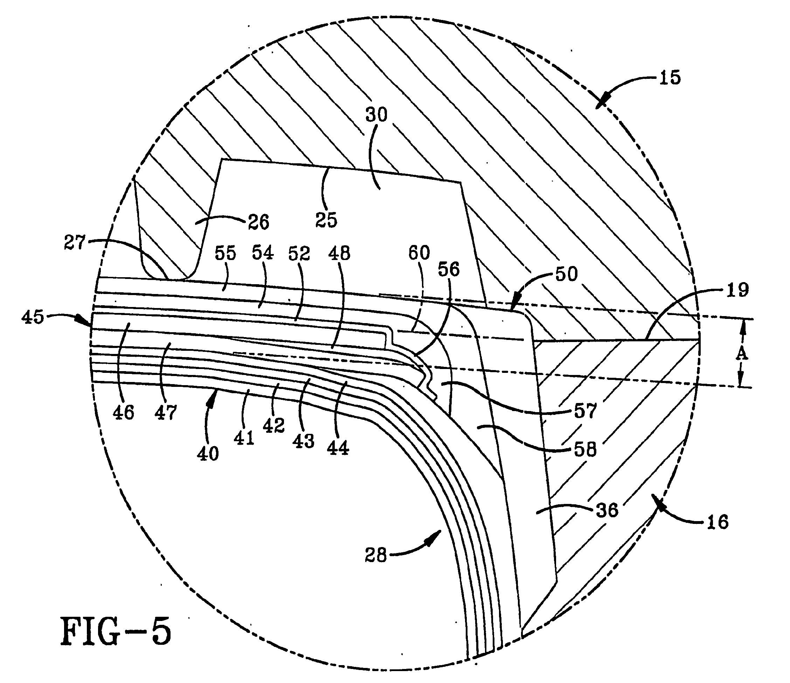

As shown particularly in Fig. 2, mold part lines 19 and 20 will be located a distance "D" inwardly from the inner tread mold circumferential surface 25 which forms the said surface 27, which for most tire sizes will be ½ inch (12.7 mm) or less. This distance "D" is measured from an imaginary line 29 extending axially between the start of the mold parting lines 19 and 20. This distance will insure that the mold part lines 19 and 20 will be in general axial alignment with a nylon reinforcing strip, whether it be a nylon cap ply or nylon cap layer, when located within crown portion.38 of tire 28, which nylon strips are shown in Figs. 5-9 and described further below. Imaginary line 29 is viewed in cross section, which in three dimension will be an imaginary cylinder extending coaxial with and inside of circumferential mold surface 25. The term axial is in relation to rotational axis 32 of green tire 14 and of mold 1 as shown in Fig. 1. Thus imaginary line 29 is referred to as axially extending which terminates adjacent the axial ends of mold 1 and of crown portion 38 of green tire 14.

As indicated above, the improved segmented tire mold of the present invention is successful in reducing flash at the mold part lines which appear in the upper sidewalls of the tire, and in particular, when a nylon reinforcing strip is incorporated into the crown portion of the tire between the belt package and tread. Heretofore, this nylon strip or strips stiffen the belt package so it will not flex enough during molding of the tire, resulting in excessive flash being formed at part lines 19 and 20, and subsequently appearing on the sidewalls of the molded tire. These nylon strips are desirable for certain tires since they enhance the high speed capability of the tire and provide cut resistance, particularly to load carrying steel belted tires which are used for both on-road and off-road. However, reduced flash is important to the purchaser of all types of tires, including those tires having a more aggressive tread pattern in the sidewall area.

Fig. 5 shows an enlarged fragmentary sectional view of one shoulder region of green tire 14 being molded in mold 1 having the nylon reinforcing strip therein. A body ply carcass indicated generally at 40 is shown with four body plies 41, 42, 43, and 44. Ply 41 is the innerliner and is formed of an air impervious elastomeric material, with plies 42, 43 and 44 being cord reinforced elastomeric strips, In addition to body ply carcass 40, a belt package 45 is mounted in the crown portion of the tire between carcass 40 and the tread. One example of belt package 45 includes a pair of steel belts 46 and 47 which are formed by a plurality of steel cords calendered in a thin layer of rubber. A wedge of rubber 48 preferably is located between steel belts 46 and 47 adjacent shoulder region 50.

A nylon cap ply 52 is located between belt package 45 and a pair of rubber cap strips 54 and 55, wherein portions of outermost rubber cap strip 54 form skid surface 27 of the tire tread. Nylon cap ply 52 preferably terminates in a pair of stepped axial ends 56 which are located inwardly from the curved ends 57 and 58 of rubber cap strips 54 and 55 respectively.

Mold parting line 19 located between tread segments 15 and sidewall plate 16 is in general axial alignment with nylon cap ply 52 as illustrated by an axially extending dot dash line 60 in Fig. 5. However, mold parting line 19 can vary within a relatively small distance represented by arrow A, having its lower limit at the interface between body ply carcass 40 and belt package 45, represented by dot dash line 69, and its other limit at skid surface 27, represented by dot dash line 70. Distance A in most tire constructions utilizing a nylon strip will be no greater than ½ inch (12.7 mm). Thus mold parting line 19 is located between the body ply carcass 40 of the tire to be vulcanized therein, and inner circumferential tread segment surface 25 which forms skid surface 27 on the vulcanized tire. This results in flash line 22 appearing very high up in the tire sidewall closely adjacent to the shoulder region as shown in Fig. 10 in contrast to prior art tires where the flash line is lower in the sidewall area.

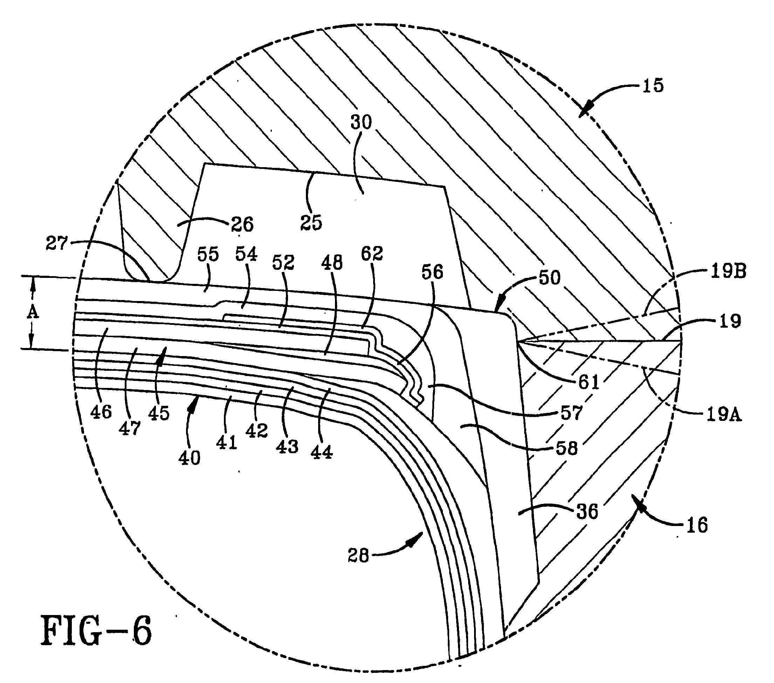

Fig. 6 shows a modified tire construction to be molded within mold 1 wherein a nylon cap layer 62 is mounted over each axial end of nylon cap ply 52 adjacent each shoulder region 50. The remaining body ply carcass, steel belts and rubber wedge are the same in the tire of Fig. 6 as is the tire shown in Fig. 5.. Again, mold parting line 19 is within the same critical region as that described above and designated by Arrow A in Fig. 5.

Mold parting lines 19 and 20 can extend at various angles, as shown by dot dash lines 19A and 19B without effecting the invention so long as the start of the segment part line, which is in contact with the elastomeric material, designated by 61 in the drawings, is within the critical area designated by arrow A in Fig. 5. lt is this location 61 which starts the part line which determines the location of flash line 22 on the molded tire and that the angle of the mold part line as it extends form reference 61 does not effect the location of flash line 22 on tire 28.

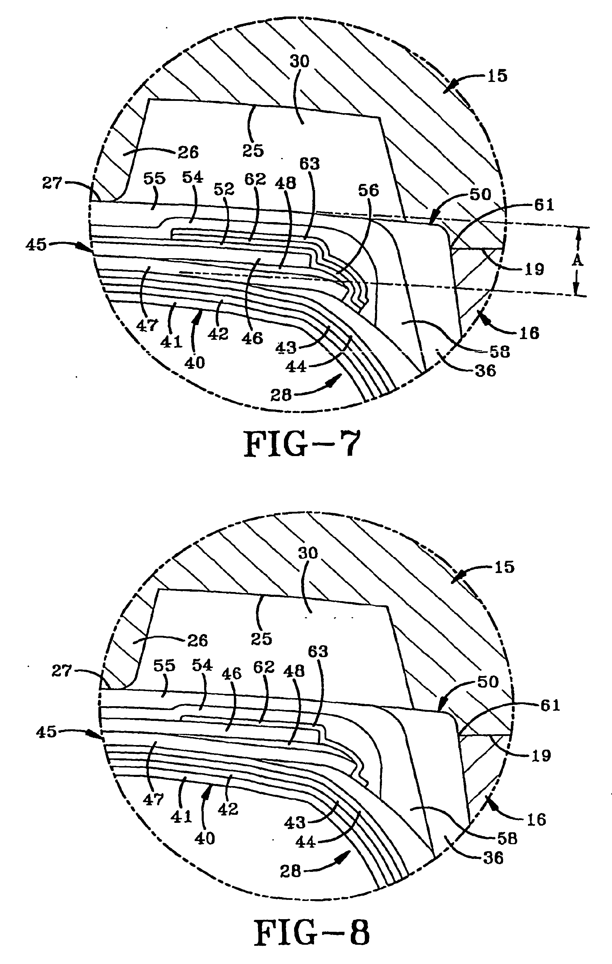

Fig. 7 shows a further modified tire construction in which two nylon cap layers 62 and 63 are mounted over the axial ends of nylon cap ply 52. Again, mold parting line 19 will be within the same critical area designated by arrow A.

Fig. 8 shows another modified tire construction in which only a single nylon cap layer 62 is located at each axial end of the tread at the shoulder regions without any nylon cap ply 52 being utilized.

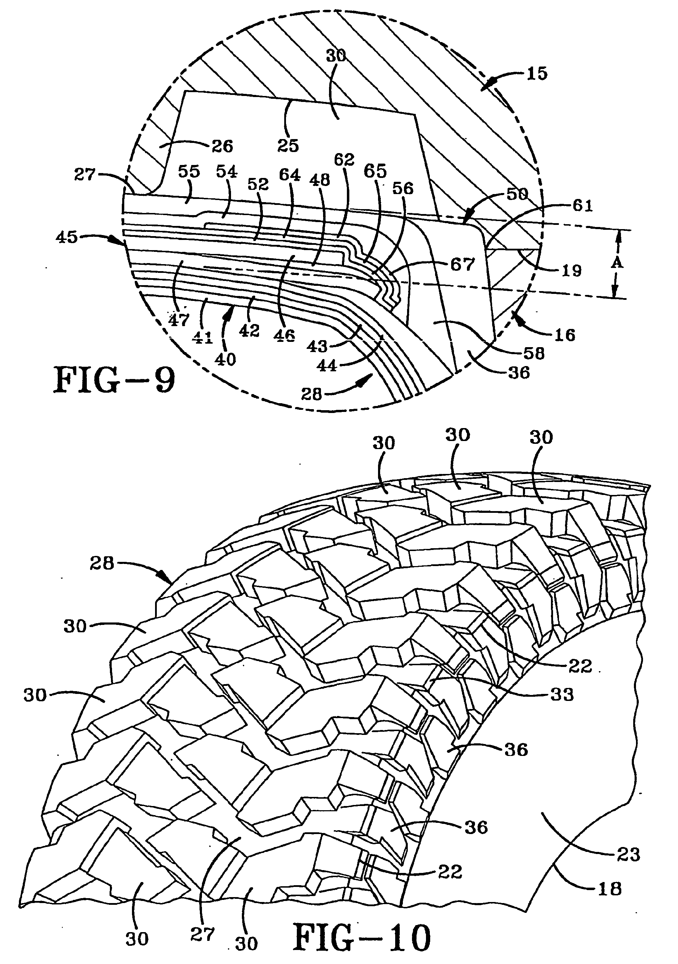

Fig. 9 shows a further embodiment in which two nylon cap plies 52 and 64 extend axially across the tire tread and throughout the crown portion between the shoulder regions and terminating in stepped ends 56 and 65 respectively, with a single nylon cap layer 62 being mounted thereon at each shoulder region, which also terminates in a stepped end 67.

Again, irrespective of the number and arrangements of nylon strips, whether it be one or more nylon cap plies or cap layers, mold parting lines 19 and 20, and in particular, starting locations 61 thereof, will be in general axial alignment with the nylon strips and as discussed above, will be within the critical distance defined by inner mold surface 25 which defines skid surface 27 of the molded tire, and the interface between body ply carcass 40 and belt package 45, which is shown in the drawings and designated by distance A, which as indicated previously, is no greater than ½ inch (12.7 mm) for most tire sizes.

Accordingly, the improved tire mold and combination tire mold and pneumatic tire having the nylon strips located in the crown portion of the tire between the belt package and skid surface, provides a mold structure and mold-tire combination which enables a pneumatic radial tire to be produced with a reduced amount of flash in the sidewalls of the tire, designated by flash line 22 in Fig. 10, by forming the mold parting lines in an area very high in the tire sidewall areas closely adjacent to the shoulder regions of the tire whereas in prior art structures, the mold flash line was lower down the sidewall of the tire and not located in the critical area defined above and shown in the drawing. As easily seen in Fig. 10, any resulting flash designated by line 22 will be less obtrusive to a casual observer than if located lower in the sidewall region.

The location and reduced flash line 22 is important in both of the sidewalls of the tire so that the outside sidewall when mounted on a vehicle provides an attractive appearance. Also this reduced flash in both sidewalls provide an attractive tire for display in the tire dealer's showroom.

It is furthermore understood that the pneumatic tire to be produced in improved mold 4 can have various tread patterns than that shown in Fig. 10, which is illustrated of one type of tire in which the reduction in flash at the mold parting lines and their location is highly desirable; and in which the mold is highly effective in reducing sidewall flash when the tire contains a nylon reinforcing strip in the crown portion of the tire.

It is understood that press 1 and its method of operation can vary without effecting the concept of the invention and the reduction in sidewall flash produced by mold 4. For example, various gears and/or pressure devices can lower and raise upper platen 2 and top sidewall mold plate 16, as well as move tread mold segments 15 in an outward direction. Likewise, bottom sidewall mold plate 17 and platen 3 can be movable and upper platen 2 and mold plate 16 fixed, or both upper and lower platens and mold plates movable, without effecting the results achieved by improved mold 4.

While the preferred embodiments of the invention have been described above, the invention is not limited thereto, but defined by the appended claims.

## Claims

1. A segmented tire mold for molding a pneumatic tire having a nylon reinforcement strip located between a skid surface (27) of the tire and the body ply carcass (40), said mold comprising:
an annular array of outwardly movable tread mold segments (15) having an inner circumferential surface (25) and inwardly extending projections (26) which form the tread pattern in the tire including the skid surface (27) and tread lugs (30) projecting therefrom; and first and second sidewall mold plates (16, 17) which are in abutting contact with said tread mold segments (15) when the mold is in a closed position and forming a pair of circumferentially extending mold parting lines (19, 20) therebetween, **characterized in that** said mold parting lines (19, 20) are located generally in axial alignment with the nylon reinforcement strip (52, 62, 63, 64) located between the skid surface (27) and the body ply carcass (40) of the tire molded in said mold.

2. The tire mold defined in claim 1 wherein the mold parting lines (19, 20) of the first and second sidewall mold plates (16, 17) with the tread mold segments (15) are in axial alignment with each other.

3. The tire mold defined in claim 1 wherein the mold is mounted between a pair of spaced platens (2, 3); and in which a pressure actuated device (7) moves at least one of said platens (2, 3) with respect to the other of said platens (2, 3).

4. The mold defined in any one of the preceding claims wherein an imaginary axial line extending between the mold parting lines (19, 20) is at a distance from the inner circumferential surface (25) of the tread mold segments (15) which forms the skid surface (27) no greater than ½ inch (12.7 mm).

5. A tire having a crown portion and a pair of sidewalls extending from the crown portion (38) to bead areas, a tread pattern formed in the crown portion (38) having a skid surface (27) and tread lugs (30) projecting therefrom, a body ply carcass (40), a reinforcing belt package (45), and a nylon reinforcement strip (52, 62, 63, 64) located between the skid surface (27) and said body ply carcass (40); said tire being molded in a mold having an annular array of movable tread mold segments (15) having an inner circumferential surface (25) and inwardly extending projections (26) which form the tread pattern in the tire including the skid surface (27) and tread lugs (30) projecting thereform, and first and second sidewall mold plates (16, 17) which are in contact with the tread mold segments (15) when the mold is in a closed position and forming a pair of circumferentially extending mold parting lines (19, 20) between the tread mold segments (15) and the sidewall mold plates (16 17), **characterized in that** said mold parting lines (19, 20) are located generally in axial alignment with the nylon reinforcement strip (52, 62, 63, 64) located between the skid surface (27) and the body ply carcass (40) of the tire molded in said mold.

6. The tire defined in claim 5 wherein the nylon strip (52, 62, 63, 64) includes at least one nylon cap layer (62, 63) located adjacent each axial end of the crown portion (38).

7. The tire defined in claim 6 wherein the nylon strip (52, 62, 63, 64) further includes a nylon cap ply (52, 64) extending axially beneath the crown portion (38) and terminating adjacent the nylon cap layers (62, 63).

8. The tire defined in claim 5 wherein the nylon strip (52, 62, 63, 64) includes at least one nylon cap ply (52, 64) extending axially across the tire substantially between the sidewalls.

9. The tire defined in any one of the preceding claims wherein the mold parting line (19, 20) is not greater than ½ inch (12.7 mm) from the inner circumferential surface (25) of the tread mold segments (15) which forms the skid surface (27).

10. The tire defined in claim 5 wherein the body ply carcass (40) includes an innerliner (41) and a plurality of plies (42, 43, 44) containing reinforcing cords; and in which the belt package (45) includes a plurality of steel belts (46, 47).

## Patentansprüche

1. Segmentierte Reifenform zum Formen eines pneumatischen Reifens mit einem Nylon-Verstärkungsstreifen, welcher sich zwischen einer Lauffläche (27) des Reifens und der Unterbaulagenkarkasse (40) befindet, wobei die Form umfasst:
eine ringförmige Anordnung von nach außen beweglichen Profilformsegmenten (15), welche eine innere Umfangsfläche (25) und sich nach innen erstreckende Vorsprünge (26) aufweisen, welche in dem Reifen das Profilmuster ausbilden, das die Lauffläche (27) und davon hervorstehende Profilstollen (30) beinhaltet; und eine erste und zweite Seitenwandformplatte (16, 17), welche sich in angrenzendem Kontakt mit den Profilformsegmenten (15) befinden, wenn die Form in einer geschlossenen Position ist, und dazwischen ein paar von sich umlaufend erstreckenden Formteilungslinien (19, 20) ausbilden, **dadurch gekennzeichnet, dass** die Formteilungslinien (19, 20) sich allgemein in axialer Ausrichtung mit dem Nylon-Verstärkungsstreifen (52, 62, 63, 64) befinden, welcher sich zwischen der Lauffläche (27) und der Unterbaulagenkarkasse (40) des in der Form geformten Reifens befindet.

2. Reifenform nach Anspruch 1, wobei die Formteilungslinien (19, 20) zwischen der ersten und zweiten Seitenwandformplatte (16, 17) und den Profilformsegmenten (15) sich miteinander in axialer Ausrichtung befinden.

3. Reifenform nach Anspruch 1, wobei die Form zwischen einem Paar von beabstandeten Platten (2, 3) angebracht ist; und wobei eine druckbetriebene Vorrichtung (7) wenigstens eine der Platten (2, 3) bezüglich der anderen der Platten (2, 3) bewegt.

4. Form nach einem der vorhergehenden Ansprüche, wobei eine sich zwischen den Formteilungslinien (19, 20) erstreckende imaginäre axiale Linie sich in einem Abstand von der inneren Umfangsfläche (25) der Profilformsegmente (15) befindet, welche die Lauffläche (27) ausbildet, der nicht größer als ½ Zoll (12,7 mm) ist.

5. Reifen mit einem Kronenabschnitt und einem Paar von sich von dem Kronenabschnitt (38) zu Wulstabschnitten erstreckenden Seitenwänden, einem in dem Kronenabschnitt (38) ausgebildeten Profilmuster mit einer Lauffläche (27) und davon hervorstehenden Profilstollen (30), einer Unterbaulagenkarkasse (40), einer Verstärkungsgurteinheit (45) und einem Nylon-Verstärkungsstreifen (52, 62, 63, 64), welcher sich zwischen der Lauffläche (27) und der Unterbaulagenkarkasse (40) befindet; wobei der Reifen geformt ist in einer Form mit einer ringförmigen Anordnung von beweglichen Profilformsegmenten (15) mit einer inneren Umfangsfläche (25) und nach innen hervorstehenden Vorsprüngen (26), welche in dem Reifen das Profilmuster ausbilden, das die Lauffläche (27) und davon hervorstehende Profilstollen (30) beinhaltet, und einer ersten und zweiten Seitenwandformplatte (16, 17), welche sich im Kontakt mit den Profilformsegmenten (15) befinden, wenn die Form in einer geschlossenen Position ist, und ein Paar von sich umlaufend erstreckenden Formteilungslinien (19, 20) zwischen den Profilformsegmenten (15) und den Seitenwandformplatten (16, 17) ausbilden, **dadurch gekennzeichnet, dass** die Formteilungslinien (19, 20) sich allgemein in axialer Ausrichtung mit dem Nylon-Verstärkungsstreifen (52, 62, 63, 64) befinden, welcher sich zwischen der Lauffläche (27) und der Unterbaulagenkarkasse (40) des in der Form geformten Reifens befindet.

6. Reifen nach Anspruch 5, wobei der Nylonstreifen (52, 62, 63, 64) wenigstens eine Nylon-Deckschicht (62, 63) beinhaltet, welche sich benachbart zu dem jeweiligen axialen Ende des Kronenabschnitts (38) befindet.

7. Reifen nach Anspruch 6, wobei der Nylonstreifen (52, 62, 63, 64) ferner eine Nylon-Decklage (52, 64) beinhaltet, welche sich unterhalb des Kronenabschnitts (38) axial erstreckt und benachbart zu den Nylon-Deckschichten (62, 63) endet.

8. Reifen nach Anspruch 5, wobei der Nylonstreifen (52, 62, 63, 64) wenigstens eine Nylon-Decklage (52, 64) beinhaltet, welche sich im Wesentlichen zwischen den Seitenwänden axial über den Reifen erstreckt.

9. Reifen nach einem der vorhergehenden Ansprüche, wobei die Formteilungslinie (19, 20) sich nicht mehr als 1/2 Zoll (12,7 mm) entfernt von der inneren Umfangsfläche (25) der Profilformsegmente (15) befindet, welche die Lauffläche (27) ausbildet.

10. Reifen nach Anspruch 5, wobei die Unterbaulagenkarkasse (40) eine Innenlage (41) und eine Vielzahl von Verstärkungscords enthaltende Lagen (42, 43, 44) beinhaltet; und wobei die Gurteinheit (45) eine Vielzahl von Stahlgurten (46, 47) enthält.

## Revendications

1. Moule à segment pour pneumatique destiné à mouler un pneumatique présentant une bande de renforcement en nylon située entre une surface d'adhérence (27) du pneumatique et la nappe carcasse (40), ledit moule comprenant :
une série annulaire de segments de moule de bande de roulement mobiles vers l'extérieur (15) présentant une surface circonférentielle interne (25) et des protubérances s'étendant vers l'intérieur (26) qui forment la sculpture de bande de roulement dans le pneumatique incluant la surface d'adhérence (27) et les barrettes de bande de roulement (30) se projetant de celle-ci ; et des premières et secondes plaques de moule de flanc (16, 17) qui sont en contact de butée avec lesdits segments de moule de bande de roulement (15) lorsque le moule est en position fermée et forment une paire de plans de joint du moule s'étendant de manière circonférentielle (19, 20) entre ceux-ci, **caractérisé en ce que** lesdits plans de joint du moule (19, 20) sont situés généralement en alignement axial avec la bande de renforcement en nylon (52, 62, 63, 64) située entre la surface d'adhérence (27) et la nappe carcasse (40) du pneumatique moulé dans ledit moule.

2. Moule de pneumatique selon la revendication 1, dans lequel les plans de joint de moule (19, 20) des premières et secondes plaques de moule de flanc (16, 17) sont en alignement axial avec les segments de moule de bande de roulement (15).

3. Moule de pneumatique selon la revendication 1, dans lequel le moule est monté entre une paire de plateaux espacés (2, 3); et dans lequel un dispositif actionné par pression (7) déplace au moins un desdits plateaux (2, 3) par rapport à l'autre desdits plateaux (2, 3).

4. Moule défini selon l'une quelconque des revendications précédentes, dans lequel une ligne axiale imaginaire s'étendant entre les plans de joint de moule (19, 20) n'est pas éloignée de plus de 1/2 pouce (12,7 mm) de la surface circonférentielle interne (25) des segments de moule de bande de roulement (15) qui forme la surface d'adhérence (27).

5. Pneumatique présentant une partie de sommet et une paire de flancs s'étendant de la partie de sommet (38) aux zones de bourrelet, une sculpture de bande de roulement formée dans la partie de sommet (38) présentant une surface d'adhérence (27) et des barrettes de bande de roulement (30) se projetant de celle-ci, une nappe carcasse (40), un enroulement de ceinture de renforcement (45), et une bande de renforcement en nylon (52, 62, 63, 64) située entre la surface d'adhérence (27) et ladite nappe carcasse (40) ; ledit pneumatique étant moulé dans un moule présentant une série annulaire de segments de moule de bande de roulement mobiles (15) présentant une surface circonférentielle interne (25) et des protubérances s'étendant vers l'intérieur (26) qui forment la sculpture de bande de roulement dans le pneumatique incluant la surface d'adhérence (27) et les barrettes de bande de roulement (30) se projetant de celle-ci, et des premières et secondes plaques de moule de flanc (16, 17) qui sont en contact avec les segments de moule de bande de roulement (15) lorsque le moule est en position fermée et formant une paire de plans de joint du moule s'étendant de manière circonférentielle (19, 20) entre les segments de moule de bande de roulement (15) et les plaques de moule de flanc (16, 17), **caractérisé en ce que** lesdits plans de joint du moule (19, 20) sont situés généralement en alignement axial avec la bande de renforcement en nylon (52, 62, 63, 64) située entre la surface d'adhérence (27) et la nappe carcasse (40) du pneumatique moulé dans ledit moule.

6. Pneumatique selon la revendication 5, dans lequel la bande de nylon (52, 62, 63, 64) comporte au moins une couche de chape en nylon (62, 63) située de manière adjacente à chaque extrémité axiale de la partie de sommet (38).

7. Pneumatique selon la revendication 6, dans lequel la bande de nylon (52, 62, 63, 64) comporte en outre une nappe sommet en nylon (52, 64) s'étendant dans le sens axial sous la partie de sommet (38) et terminant de manière adjacente aux couches de chape en nylon (62, 63).

8. Pneumatique selon la revendication 5, dans lequel la bande de nylon (52, 62, 63, 64) comporte au moins une nappe sommet en nylon (52, 64) s'étendant dans le sens axial sur le pneumatique sensiblement entre les flancs.

9. Pneumatique défini selon l'une quelconque des revendications précédentes, dans lequel le plan de joint du moule (19, 20) n'est pas éloigné de plus de 1/2 pouce (12,7 mm) de la surface circonférentielle interne (25) des segments de moule de bande de roulement (15) qui forme la surface d'adhérence (27).

10. Pneumatique selon la revendication 5, dans lequel la nappe carcasse (40) comporte un calandrage intérieur (41) et une pluralité de plis (42, 43, 44) contenant des fils câblés de renforcement ; et dans lequel l'enroulement de ceinture (45) comporte une pluralité de ceintures d'acier (46, 47).
